# EUROPÄISCHE PATENTSCHRIFT

(11) **EP 1 332 082 B1**
(45) Veröffentlichungstag und Bekanntmachung des Hinweises auf die Patenterteilung: **11.01.2006**
(21) Anmeldenummer: 01993381.1
(22) Anmeldetag: 03.11.2001
(51) Int. Cl.: B62D 1/19, B21D 39/04, B23P 11/00, F16F 7/09

(54) **LENKSPINDELANORDNUNG UND EIN VERFAHREN ZU DEREN HERSTELLUNG**
STEERING SPINDLE ASSEMBLY AND A METHOD FOR THE PRODUCTION THEREOF
SYSTEME DE COLONNE DE DIRECTION ET SON PROCEDE DE PRODUCTION

(30) Priorität: 09.11.2000 DE 10055608
(43) Veröffentlichungstag der Anmeldung: 06.08.2003
(73) Patentinhaber: DaimlerChrysler AG, 70567 Stuttgart (DE)
(72) Erfinder: KITTLER, Holger, 20357 Hamburg (DE); LOX, Hanno, 25335 Elmshorn (DE); SPIELMANNLEITNER, Christian, 20257 Hamburg (DE)
(86) Internationale Anmeldenummer: PCT/EP2001/012752
(87) Internationale Veröffentlichungsnummer: WO 2002/038431

(56) Entgegenhaltungen:
- EP-A- 0 041 835
- DE-A- 19 750 391
- GB-A- 2 347 389
- "SHAPE MEMORY ALLOY RING FASTENED ENERGY ABSORBING STEERING COLUMNS AND DEVICES" RESEARCH DISCLOSURE, KENNETH MASON PUBLICATIONS, HAMPSHIRE, GB, Nr. 371, 1. März 1995 (1995-03-01), Seite 231 XP000512406 ISSN: 0374-4353

## Beschreibung

Die Erfindung betrifft eine Lenkspindelanordnung gemäß dem Oberbegriff des Patentanspruches 1 und ein Verfahren zu deren Herstellung gemäß dem Oberbegriff des Patentanspruches 8.

Eine gattungsgemäße Lenkspindelanordnung und ein gattungsgemäßes Herstellungsverfahren ist aus der DE-OS 14 30 946 bekannt. Die beschriebene Anordnung besteht aus zwei teleskopierbaren Lenkspindelbauteilen, die reibschlüssig aneinander fixiert sind, wobei das vom Lenkrad auf das innere Bauteil übertragene Lenkmoment auf das äußere Spindelbauteil durch den Reibschluß weitergetragen wird. Bei einem axialen Stoß im Crashfall werden die beiden Bauteile ineinandergeschoben, wobei Aufprallenergie durch die Reibung vernichtet wird. Der Reibschluß wird in unterschiedlicher Weise gebildet, nämlich einerseits durch einen Toleranzring, der in einer Nut des Innenumfanges des äußeren Bauteiles angeordnet ist, und andererseits durch eine in der Einstecklage der Bauteile eingebrachte Kunststoffschicht, die den Reibschluß zwischen den Bauteilen vermittelt. Als weitere Variante weisen die miteinander kommunizierenden Enden der Bauteile mit Schrägen versehene federbelastete Formschlußelemente auf, die ineinandergreifen und in Gebrauchslage der Bauteile auf den Schrägen getrieben durch die Druckfeder derart verrutschen, daß eine radiale Anpressung des inneren Bauteils am äu-βeren Bauteil entsteht. Zusätzlich sind die miteinander in Verbindung stehenden Enden der Bauteile durch ihre Mehrkantform in in Umfangsrichtung formschlüssig arretiert, wodurch das Lenkdrehmoment noch besser übertragen werden kann.

Bei der bekannten Anordnung ist jedoch nachteilig, daß einerseits die Anordnung eines Toleranzringes relativ aufwendig ist, da dieser auf die Querschnittsdimensionierung des äußeren Lenkspindelbauteils speziell angepaßt sein muß und eine Halterungseinrichtung (Aufnahmenut) erfordert, die die Herstellung der Lenkspindel kompliziert. Des weiteren weist der Toleranzring selbst Fertigungstoleranzen auf, die bei Fahrzeugzusammenstößen im Vergleich der einzelnen Lenkspindeln zu Streuungen im Verfahrweg des inneren Bauteils und damit zu unterschiedlichen E-nergieaufnahmen führen. Dies bedeutet jedoch, daß für die Lenkspindel - entgegen den geforderten Sicherheitsauflagen - ein konkreter einheitlicher Sicherheitsstandard nicht von vornherein festlegbar ist. Die aufgezeigte Variante der Kunststoffschicht ist wenig praktikabel, da diese sehr schnell verschleißt und das Lenkmoment mit der Zeit sehr unpräzise auf das äußere Bauteil überträgt, was zu einem fahrerischen Risiko führt. Zudem ist das Verfahren zur Erzeugung des Reibschlusses mit der Schicht umständlich, da diese über einen recht engen Ringspalt zwischen die Spindelbauteile plaziert werden muß. Dies bedeutet einen Verfahrensschritt zur Herstellung der Verbindung, bei dem nicht einschätzbar ist, ob die Schicht vollständig ausgebildet ist und dadurch die erwartete Höhe des Reibschlusses aufgeboten werden kann. Auch die andere Variante mit den angeschrägten Formschlußelementen ist von der Ausbildung und der Montage sehr aufwendig. Zudem dürfte bei einem Crash der Fahrer einen spontanen ungebremsten Stoß erhalten, da das Formschlußelement des äußeren Bauteils an diesem befestigt ist und somit einen Verschiebeweg des inneren Bauteils verhindert.

Der Erfindung liegt die Aufgabe zugrunde, eine gattungsgemäße Anordnung dahingehend weiterzubilden, daß in einfacher Weise unter Gewährleistung der Dauerhaltbarkeit und einer direkten Lenkmomentübertragung der Anordnung eine möglichst konkrete Definierung der Deformationsenergieaufnahme der Lenkspindel für den Crashfall erzielt wird. Des weiteren ist es Aufgabe der Erfindung, ein gattungsgemäßes Verfahren zur Herstellung der Anordnung dahingehend weiterzubilden, daß es mit nur geringem Aufwand und prozeßsicher auszuführen ist.

Die Aufgabe ist erfindungsgemäß durch die Merkmale des Patentanspruches 1 hinsichtlich der Anordnung und durch die Merkmale des Patentanspruches 8 hinsichtlich des Verfahrens gelöst.

Dank der Erfindung entfallen für die Anordnung jegliche Bauelemente, die den Reibschluß zwischen dem inneren und äußeren Lenkspindelbauteil vermitteln. Dadurch wird infolge der Verringerung der Teilevielfalt die Konstruktion der Anordnung vereinfacht. Des weiteren entstehen keine Fertigungstoleranzen und/oder Verschleiß der Bauelemente, so daß eine konkrete Definierung der Deformationsenergieaufnahme der Lenkspindel für den Crashfall möglich ist. Die durch die Verpressung der beiden Lenkspindelbauteile erzeugte Preßpassung ist durch verschiedene Verfahren mit geringem Aufwand prozeßsicher herstellbar, beispielsweise durch Magnetimpulsumformung oder thermisches Aufschrumpfen des äußeren Bauteils in Stecklage der beiden Bauteile. Durch den direkten Kontakt der Baueilwandungen aneinander wird eine unmittelbare Lenkmomentübertragung der Anordnung erzielt. Die Preßpassung gewährleistet weiterhin eine Dauerhaltbarkeit der Anordnung im Normalbetrieb und kann aufgrund der hohen Reibkraft der Fügepartner, d.h. der beiden Lenkspindelbauteile, hohe Verschiebekräfte im Crashfall aufnehmen. Der Reibschluß ist durch die Wahl der Prozeßparameter der Herstellugsverfahren gezielt einstellbar, wobei für den Crashfall eine bestimmte axiale Verschiebekraft festgelegt und somit ein einheitlicher Kraftverlauf erwirkt werden kann. Mit dieser Wahl kann der Kraftverlauf beliebig nach Wunsch und Bedarf variiert werden.

Zweckmäßige Ausgestaltungen der Erfindung können den Unteransprüchen entnommen werden; im übrigen ist die Erfindung anhand eines in den Zeichnungen dargestellten Ausführungsbeispieles nachfolgend näher erläutert; dabei zeigt:
Fig. 1 in einem seitlichen Längsschnitt eine erfindungsgemäße Lenkspindelanordnung,
Fig. 2 abschnittsweise die Lenkspindelanordnung aus Fig. 1 in einer perspektivischen Darstellung,
Fig. 3 die Lenkspindelanordnung aus Fig. 2 in einer Querschnittsdarstellung.

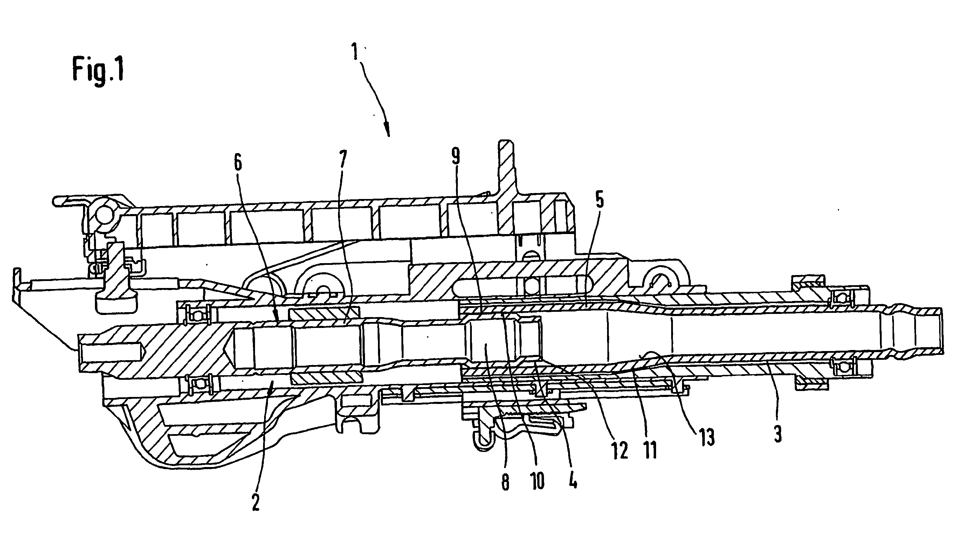

In Fig.1 ist eine Lenkspindelanordnung 1 dargestellt, welche unter anderem aus einem ersten lenkradfernen Bauteil 2 und einem zweiten lenkradnahen Bauteil 3 zusammengesetzt ist, wobei die Bauteile 2 und 3 kollinear zueinander angeordnet sind. Das lenkradferne Bauteil 2 taucht dabei mit seinem dem Bauteil 3 zugewandten Ende 4 in ein hohles Ende 5 des Bauteils 3 ein. Alternativ zu dieser Ausführung kann auch das Ende 5, das dann nicht hohl ausgebildet sein muß, in das dann hohle Ende 4 des Bauteils 2 eintauchen. Obwohl das jeweils eintauchende Ende 4 oder 5 und gleichfalls das zu ihm gehörende Bauteil 2 oder 3 aus stangenartigem Vollmaterial ausgebildet sein kann, ist aus Gründen des Leichtbaus vorteilhaft, die eintauchenden Enden 4 bzw. 5 und/oder das zugehörende Bauteil 2 bzw. 3 hohl bzw. rohrförmig zu gestalten. Insgesamt werden im gezeigten Ausführungsbeispiel beide Bauteile 2 und 3 rohrförmig ausgeführt, eben aus Gewichtsgründen und aus der Überlegung heraus, die Bauteile 2 und 3 kostengünstig und mit möglichst geringem Aufwand herzustellen. Hierbei können beispielsweise gezogene oder aus Platinen hergestellte längsnahtgeschweißte Rohre zur Verfügung gestellt werden. Das Bauteil 2 besitzt zum einen an seinem lenkgetriebezugewandten Ende 6 und zum anderen an seinem eintauchenden Ende 4 eine radiale Aufweitung 7 und 8. Mit dem Au-βenumfang seiner Aufweitung 8 liegt das Ende 4 am Innenumfang des Endes 5 reibschlüssig an und zwar derart, daß die entsprechenden Wandungen 9 und 10 der beiden Enden 4 und 5 über den Bereich des Reibschlusses in Form einer Preßpassung unmittelbar aneinander liegen. Das Ende 5 des lenkradnahen Bauteiles 3 weist bezüglich des restlichen Bauteils 3 einen größeren Durchmesser auf. Die Durchmessergestaltung wird ausgehend von einem Rohrrohling mit einem dem Durchmesser des Endes 5 entsprechenden Durchmesser durch Rundkneten bewirkt, wobei das Ende 5 über einen konisch sich verjüngenden Abschnitt 11 mit dem anderen Ende verbunden ist. Es ist jedoch alternativ ebenfalls denkbar, daß das Ende 5 als Auftulpung des rohrförmigen Bauteiles 3 in verfahrenstechnisch vorteilhafter Weise mittels Innenhochdruckumformung gestaltet ist und mit einem konischen Abschnitt 11 in das restliche unaufgeweitete Bauteil 3 übergeht. Die Bauteile 2 und 3 können mit kreisrundem Querschnitt ausgebildet sein, was den Aufwand zur Herstellung vereinfacht.

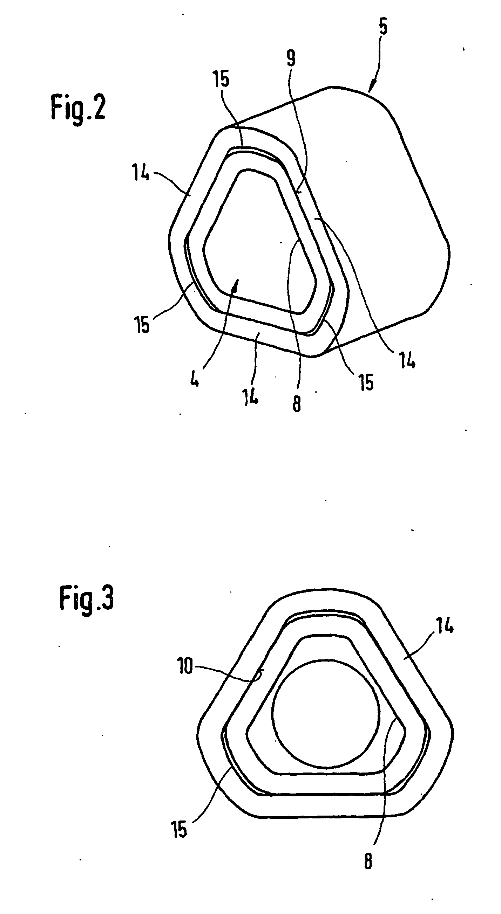

Gemäß Fig. 2 und 3 weisen die Enden 4 und 5 unter Bildung eines in Umfangsrichtung wirkenden Formschlusses einen von der Kreisform abweichenden Querschnitt, insbesondere eine Polygonform auf. Die beiden Figuren zeigen in grober Näherung eine Dreiecksform der Aufweitung des Endes 4 und des Endes 5. Obwohl die Anlage der Wandungen 9 und 10 der beiden Enden 4 und 5 lediglich lokal an einer oder mehreren Stellen bestehen kann, ist es vorteilhaft, daß die Wandungen 9 und 10 der Enden 4 und 5 vollumfänglich spielfrei aneinander anliegen, so daß eine gleichmäßigere Kraftverteilung zur Gewährleistung der Verläßlichkeit der Einstellung eines definierten Verschiebeweges der Bauteile 2 und 3 relativ zueinander bei einem axialen Stoß auf die Lenkspindel einerseits und bei einer Lenkdrehmomentübertragung zur Vermeidung von lokalen verschleißfördernden und versagensträchtigen Bauteilbelastungen andererseits erreicht wird.

Der genannte konusartige Abschnitt 11 des äußeren Endes 5 des Bauteiles 3 liegt außerhalb des Bereiches der Preßpassung und ist von der Abschlußkante 12 des innen liegenden Endes 4 axial beabstandet. Durch das Vorsehen eines konischen Abschnittes 11 läßt sich der Kraftverlauf im Falle eines axialen crashbedingten Stoßes am Ende des Verschiebeweges in sicherheitstechnisch günstiger Weise beeinflussen. Am Ende des Verschiebeweges läuft das Bauteil 2 mit der Abschlußkante 12 seines Endes 4 auf die Innenwandung 13 des konischen Abschnittes 11 auf, was zu einem Anstieg der Verschiebekraft führt. Die Abschlußkante 12 trifft im Übergang der Dreiecksform des äußeren Bauteils 3 zum Konus zuerst die Umfangsbereiche dieser Zwischenform, an denen der Auslauf der Dreiecksflanken fehlt. Bei einer weiteren Verschiebung des Bauteils 2 gehen diese partiellen Kontaktzonen in eine geschlossene Kontaktzone mit annähernder Kreisform über, wodurch die Verschiebekraft stark ansteigt. Aufgrund der dabei erreichten radialen Aufweitung des äußeren Bauteils 3 wird in erheblichem Maße kinetische Energie des Bauteils 2 in Deformationsenergie umgewandelt. Die Beeinflussung der Charakteristik der Verschiebekraftverlaufes kann des weiteren durch eine Anfasung oder Verrundung der Abschlußkante 12 des inneren Endes 4 nach Bedarf variiert werden. Der entscheidende Vorteil in der Formgebung der Abschlußkante 12 und des konischen Abschnittes 11 liegt im wesentlichen darin, daß ein harter Endanschlag, also ein spontanes sehr steiles Ansteigen der Verschiebekraft und damit eine hohe schlagartige Belastung des Fahrers beim Aufprall vermieden werden kann.

Zur Herstellung einer derartigen Lenkspindelanordnung 1 wird das Bauteil 2 mit seinem Ende 4 in das Ende 5 des Bauteils 3 mit Spiel derart eingesteckt, daß ein Verschiebeweg des Bauteils 2 im Bauteil 3 verbleibt und eine kurze Überlappungszone der Enden 4 und 5 entsteht. Hierbei ist die Anfasung der Abschlußkante 12 vorteilhaft, da sie beim Einfädeln des Endes 4 in das Ende 5 zentrierend hilfreich ist. Aufgrund der Überlappung wird in dieser Zone eine Doppelwandigkeit des Gesamtbauteils erzielt, die dort eine besonders hohe Biegesteifigkeit erbringt. Zur Bildung des Reibschlusses werden die Wandungen 9 und 10 der Enden 4,5 der beiden Bauteile 2,3 miteinander verpreßt. Dies erfolgt in vorteilhafter Weise mittels fluidischem Innenhochdruck, wobei eine an einen Fluidhochdruckerzeuger angeschlossene Aufweitlanze mit einer Axialbohrung und zumindest einer in einen durch Radialdichtungen abgedichteten Ringkanal am Lanzenmantel mündenden Querbohrung in das hohle Bauteil 2 eingeschoben wird, so daß der Ringkanal an der axialen Stelle der zu erzeugenden Aufweitung 8 zu liegen kommt. Über die Bohrungen wird dann ein Druckfluid eingeleitet und das Ende 4 des Bauteils 2 partiell - in der Zone zwischen den zwei Radialdichtungen - druckbeaufschlagt. Infolgedessen weitet sich erwartungsgemäß das Ende 4 dort allseitig radial auf und wird an die Wandung 10 des äußeren Bauteils 3 angepreßt. Voraussetzung für den erzielten Reibschluß ist, daß das äußere Bauteil 3 aus einem Werkstoff mit höhere Elastizitätsgrenze besteht als das innere Bauteil 2. Auf diese Weise stellt sich nach der Fluidhochdruckentspannung und Relaxierung des elastischen Verformungsanteils beider Bauteile 2 und 3 ein Gleichgewichtszustand ein, der auf einer positiven Radialzuspannung des Bauteils 3 und einer negativen Radialzugspannung des Bauteils 2 basiert. Vereinfacht gesagt wird die Preßpassung durch eine plastische Aufweitung des innenliegenden Endes 4 und durch eine elastische rückfedernde Verformung des äußeren Endes 5 gebildet. Aufgrund der von einer kreisrunden Form abweichenden Dreiecksform des Endes 5 des äußeren Bauteiles kommt der innenhochdruckbeaufschlagte Werkstoff des Bauteiles 2 zuerst an den Flanken 14 des Bauteiles 3 unter Erzeugung einer definierten Axialkraft auf einer definierten Fläche bei einstellbarem Anpreßdruck zur bleibenden stützenden Anlage und fließt dann in die Ecken 15 des Endes 5 und wird dort eingeformt. Auf diese Weise entsteht in Tangentialrichtung eine formschlüssige, das übertragbare Drehmoment maximierende Verbindung, wohingegen sich in Axialrichtung durch pressendes Anlegen des Bauteils 2 an die Flanken 14 des Bauteils 3 lediglich ein Reibschluß ausbildet. Durch Anpassung der Prozeßparameter bei der Innenhochdruckbeaufschlagung, wie die Länge der Fügezone, Höhe und Haltezeit des Fügedrucks sowie die Wahl der verwendeten Werkstoffe für die Bauteile kann die axiale Verschiebekraft definiert verändert werden. Das Fließen des Werkstoffes in die Ecken 15 des Endes 5 ist nicht zwingend erforderlich. Die Enden 4 und 5 können durch Rundkneten derart vorbearbeitet sein, daß dies nicht mehr notwendig ist. Damit können bereits relativ kleine Verschiebekräfte eingestellt und trotzdem gleichzeitig hohe Lenkmomente übertragen werden.

Bei der erzeugten Querpreßverbindung geht bei der Berechnung des übertragbaren Drehmomentes noch ein Formzahl als Parameter ein, die den Formschluß in Tangentialrichtung berücksichtigt. Bei Versuchen mit dem vorliegenden Dreieckprofil wurden Formzahlen in der Größenordnung von 13 erreicht, was bedeutet, daß das übertragbare Drehmoment etwa 13 mal höher ist als das einer kreiszylindrischen Querpreßverbindung. Für die Formzahlen sind noch höhere Werte denkbar, wenn die Werkstoffkombinationen der Bauteile 2 und 3, die Profilformen, Fügeparameter usw. in geeigneter Weise verändert werden. Aufgrund dessen ist die Verwendung der Innenhochdruckumformtechnik zur Erzielung der Preßverbindung besonders gut einsetzbar, da mit ihr in einfacher Weise die Prozeßparameter mit sehr guter Überwachbarkeit steuerbar sind und damit eine hinsichtlich der Kraftverhältnisse und der exakten Positionierung der Bauteile 2 und 3 zueinander reproduzierbare und definiert vorwählbare Preßverbindung ermöglicht wird. Dies ist für derartige Lenkspindelanordnungen besonders geeignet, da dort hohe Anforderungen an das übertragbare Drehmoment bei gleichzeitig genau einstellbarer und relativ geringer axialer Verschiebekraft anfallen. Dies ist insbesondere bei Sicherheitslenkspindeln der Fall, die bei einem Fahrzeugaufprall mit einer definierten axialen Verschiebekraft Crashenergie absorbieren müssen. Aufgrund der konturgetreuen Anlegung des Materials des Bauteils 2 im Bereich der Aufweitung 8 an die Wandung 10 des Endes 5 des Bauteils 3 spielen Fertigungstoleranzen der beiden Bauteile 2 und 3, die durch die starke Abhängigkeit der Axialkraft von der Qualität der Kontakflächen der Bauteile 2,3 bei herkömmlichen Sicherheitslenkspindeln zu hohen Axialkraftstreuungen und damit zu einer sehr unscharfen Einschätzung des Crashverhaltens der Lenkspindel führen, so daß aufwendige Nacharbeiten erforderlich sind, in höchst vorteilhafter Weise keine Rolle mehr.

Versuche haben auch hier gezeigt, daß ein solches Kraftniveau durch die Prozeßparameter innerhalb der verfahrensbedingten Grenzen relativ genau und einfach einstellbar ist, daß die Streuung des Kraftniveaus bei gleichen Prozeßparametern überraschend gering ist, und daß der Kraft-Weg-Verlauf mit einem leichten und nahezu linearen Anstieg für den Abbau von Crashenergie gut geeignet ist.

## Patentansprüche

1. Lenkspindelanordnung mit einem ersten lenkradnahen Bauteil und einem zweiten lenkradfernen Bauteil, wobei eines der einander zugewandten Enden des einen Bauteils in das hohle Ende des anderen Bauteils eintaucht und wobei die beiden Enden miteinander reibschlüssig verbunden sind,
**dadurch gekennzeichnet,**
**daß** die Wandungen (9,10) der beiden Enden (4, 5) über den Bereich des Reibschlusses in Form einer Preßpassung unmittelbar aneinander liegen, und daß das äußere Ende (5) außerhalb der Preßpassung in seiner Längserstreckung einen konusartig sich verjüngenden Abschnitt (11) aufweist, der vom inneren Ende (4) axial beabstandet ist.

2. Lenkspindelanordnung nach Anspruch 1,
**dadurch gekennzeichnet,**
**daß** die Bauteile (2,3) rohrförmig mit kreisrundem Querschnitt ausgebildet sind.

3. Lenkspindelanordnung nach Anspruch 1,
**dadurch gekennzeichnet,**
**daß** beide Bauteile (2,3) hohl sind und daß zumindest die Enden (4,5) der Bauteile (2,3) einen von der Kreisform abweichenden Querschnitt, insbesondere eine Polygonform aufweisen.

4. Lenkspindelanordnung nach einem der Ansprüche 1 bis 3,
**dadurch gekennzeichnet,**
**daß** die Wandungen (9,10) der Enden (4,5) vollumfänglich spielfrei aneinander anliegen.

5. Lenkspindelanordnung nach einem der Ansprüche 1 bis 4,
**dadurch gekennzeichnet,**
**daß** die Preßpassung durch eine plastische Aufweitung (8) des innenliegenden Endes (4) und durch eine elastische rückfedernde Verformung des äußeren Endes (5) gebildet ist.

6. Lenkspindelanordnung nach einem der Ansprüche 1 bis 5,
**dadurch gekennzeichnet,**
**daß** das innere Ende (4) an seiner Abschlußkante (12) angefast oder verrundet ist.

7. Verfahren zur Herstellung einer Lenkspindelanordnung nach Anspruch 1, wobei ein erstes lenkradnahes Bauteil und ein zweites lenkradfernes Bauteil mit Spiel zusammengesteckt und miteinander reibschlüssig verbunden werden,
**dadurch gekennzeichnet,**
**dass** die Wandungen (9,10) der beiden Bauteile (2,3) entlang des Bereiches des Reibschlusses miteinander verpreßt werden, und dass vorher das innenliegende Bauteil (2) soweit in das außenliegende Bauteil (3) gesteckt wird, dass das Ende (4) des innenliegenden Bauteils (2) von einem außerhalb der Preßpassung in seiner Längserstreckung konusartig sich verjüngenden Abschnitt (11) des Endes (5) des außenliegenden Bauteils (3) axial beabstandet ist.

8. Verfahren nach Anspruch 7,
**dadurch gekennzeichnet,**
**daß** die Bauteile (2,3) beim Verpressen formschlüssig miteinander verbunden werden.

9. Verfahren nach einem der Ansprüche 7 oder 8,
**dadurch gekennzeichnet,**
**daß** das innere Bauteil (2) hohl ist und mittels fluidischem Innenhochdruck aufgeweitet und an die Innenwandung (10) des äußeren Bauteils (3) angepreßt wird, wobei das äußere Bauteil (3) elastisch und das innere Bauteil (2) plastisch aufgeweitet wird.

## Claims

1. Steering spindle arrangement having a first component remote from the steering wheel and a second component near the steering wheel, with one of the mutually facing ends of the one component dipping into the hollow end of the other component, and with the two ends being connected frictionally to each other, **characterized in that** the walls (9, 10) of the two ends (4, 5) lie directly on each other in the form of a press fit over the region of the frictional connection.

2. Steering spindle arrangement according to Claim 1, **characterized in that** the components (2, 3) are of tubular design with a circular cross section.

3. Steering spindle arrangement according to Claim 1, **characterized in that** both components (2, 3) are hollow, and **in that** at least the ends (4, 5) of the components (2, 3) have a cross section differing from the circular shape, in particular a polygonal shape.

4. Steering spindle arrangement according to one of Claims 1 to 3, **characterized in that** the walls (9, 10) of the ends (4, 5) bear against each other in a play-free manner over their full extent.

5. Steering spindle arrangement according to one of Claims 1 to 4, **characterized in that** the press fit is formed by plastic expansion (8) of the inner end (4) and by elastic, resilient deformation of the outer end (5).

6. Steering spindle arrangement according to one of Claims 1 to 5, **characterized in that** the inner end (4) is bevelled or rounded at its edge (12).

7. Method for producing a steering spindle arrangement, according to Claim 1, with a first component remote from the steering wheel and a second component near the steering wheel being plugged together with play and being connected frictionally to each other, **characterized in that** the walls (9, 10) of the two components (2, 3) are pressed to each other along the region of the frictional connection, and **in that** beforehand the inner component (2) is plugged into the outer component (3) sufficiently far for the end (4) of the inner component (2) to be spaced apart axially from a section (11) of the end (5) of the outer component (3), which section tapers in a cone-like manner in its longitudinal extent outside the press fit.

8. Method according to Claim 7, **characterized in that** the components (2, 3) are connected to each other in a form-fitting manner when pressed together.

9. Method according to either of Claims 8 or 9, **characterized in that** the inner component (2) is hollow and is expanded by means of fluidic internal high pressure and is pressed onto the inner wall (10) of the outer component (3), the outer component (3) being expanded elastically and the inner component (2) being expanded plastically.

## Revendications

1. Système de colonne de direction avec un premier composant près du volant et un second composant loin du volant, dans lequel une des extrémités tournées l'une vers l'autre de l'un des composants plonge dans l'extrémité creuse de l'autre composant et dans lequel les deux extrémités sont reliées ensemble de manière entraînée par friction, **caractérisé en ce que**, les parois (9, 10) des deux extrémités (4, 5) s'appuient directement l'une contre l'autre par la zone d'entraînement par friction sous la forme d'un ajustage serré, et **en ce que** l'extrémité extérieure (5) à l'extérieur de l'ajustage serré comporte dans son étendue longitudinale un tronçon (11) se rétrécissant à la manière d'un cône, qui est maintenu à distance de l'extrémité intérieure (4) de manière axiale.

2. Système de colonne de direction selon la revendication 1, **caractérisé en ce que** les composants (2, 3) sont conçus en forme de tube avec une section transversale circulaire.

3. Système de colonne de direction selon la revendication 1, **caractérisé en ce que** les deux composants (2, 3) sont creux et **en ce qu'**au moins les extrémités (4, 5) des composants (2, 3) comportent une section transversale s'écartant de la forme circulaire, en particulier une forme de polygone.

4. Système de colonne de direction selon l'une quelconque des revendications 1 à 3, **caractérisé en ce que** les parois (9, 10) des extrémités (4, 5) s'appuient l'une contre l'autre sans jeu sur toute leur étendue.

5. Système de colonne de direction selon l'une quelconque des revendications 1 à 4, **caractérisé en ce que** l'ajustage serré est constitué par un évasement plastique (8) de l'extrémité se trouvant à l'intérieur (4) et par une déformation élastique de retour de l'extrémité extérieure (5).

6. Système de colonne de direction selon l'une quelconque des revendications 1 à 5, **caractérisé en ce que** l'extrémité intérieure (4) est biseautée ou arrondie sur son arête (12).

7. Procédé de production d'une colonne de direction selon la revendication 1, dans lequel un premier composant près du volant et un second composant loin du volant sont enfichés ensemble avec jeu et reliés ensemble d'une manière entraînée par friction, **caractérisé en ce que**, les parois (9, 10) des deux composants (2, 3) sont pressées ensemble le long de la zone d'entraînement par friction, et **en ce qu'**auparavant le composant situé à l'extérieur (2) est enfiché aussi loin dans le composant situé à l'extérieur (3) de manière à ce que l'extrémité (4) du composant situé à l'intérieur (2) soit maintenue à distance de manière axiale d'un tronçon se rétrécissant sur son étendue longitudinale à la manière d'un cône, à l'extérieur de l'ajustage serré (11), tronçon de l'extrémité (5) du composant situé à l'extérieur (3).

8. Procédé selon la revendication 7, **caractérisé en ce que** les composants (2, 3) sont reliés ensemble par concordance des formes lors du pressage.

9. Procédé selon l'une quelconque des revendications 7 ou 8, **caractérisé en ce que** le composant intérieur (2) est creux et évasé au moyen d'une haute pression interne fluidique et pressé sur la paroi intérieure (10) du composant extérieur (3), dans lequel le composant extérieur (3) est évasé de manière élastique et le composant intérieur (2) est évasé de manière plastique.
